# EUROPEAN PATENT APPLICATION

(11) **EP 4 604 234 A1**
(43) Date of publication of application: **20.08.2025**
(21) Application number: 24870109.6
(22) Date of filing: 06.08.2024
(51) Int. Cl.: H01M 10/04

(54) **WIRE HARNESS ISOLATION PLATE ASSEMBLY MECHANISM AND BATTERY PRODUCTION LINE**

(30) Priority: 28.09.2023 CN 202322657126 U
(71) Applicant: Contemporary Amperex Technology Co., Limited, Ningde, Fujian 352100 (CN)
(72) Inventor: LUO, Kang, Ningde, Fujian 352100 (CN); QIU, Shiping, Ningde, Fujian 352100 (CN); LIU, Yang, Ningde, Fujian 352100 (CN); ZHAO, Bin, Ningde, Fujian 352100 (CN)
(74) Representative: Herrmann, Uwe
(86) International application number: PCT/CN2024/110088
(87) International publication number: WO 2025/066560

(57) **Abstract**

This disclosure provides a harness isolation plate assembly mechanism and a battery production line. The harness isolation plate assembly mechanism includes: a suction tool including a first bracket and a suction assembly, where the first bracket is provided with a first connection structure, the first connection structure being configured to connect to a transport device to move the first bracket, and an extension surface of the first bracket being parallel to an extension surface of a harness isolation plate to be grabbed; and the suction assembly is fixed on the extension surface of the first bracket and arranged to avoid a harness region of the harness isolation plate, and the suction assembly is configured to adsorb or release the harness isolation plate. The harness isolation plate assembly mechanism of this disclosure can avoid low-strength regions on the harness isolation plate and disperse a force on the harness isolation plate, achieving damage-free assembly of the harness isolation plate. The battery production line of this disclosure, by employing the harness isolation plate assembly mechanism of this disclosure, can similarly achieve damage-free assembly of the harness isolation plate.

## Description

### CROSS-REFERENCE TO RELATED APPLICATIONS

This disclosure is based on Chinese Patent Application No. 202322657126.3, filed on September 28, 2023, entitled "HARNESS ISOLATION PLATE ASSEMBLY MECHANISM AND BATTERY PRODUCTION LINE," and claims the priority of the Chinese patent application, which is incorporated herein by reference in its entirety.

### TECHNICAL FIELD

This disclosure relates to the field of battery technologies, and particularly to a harness isolation plate assembly mechanism and a battery production line.

### BACKGROUND

The application of new energy batteries in life and industry is becoming increasingly widespread. For example, new energy vehicles equipped with batteries have been widely used, and batteries are also increasingly being used in the field of energy storage and other fields.

In a traditional traction battery pack, a harness busbar is typically provided to connect battery cell groups in series and parallel, each harness in the harness busbar reaches an electrode, and temperature sensors and voltage sampling harnesses are arranged on the surface of the harness busbar. This arrangement not only results in complex wiring but also occupies a significant amount of space.

To replace the original complex wiring, integrated processing has been applied to traction battery packs in the prior art. After integration, battery cell groups within the battery pack are connected in series and parallel via a harness isolation plate (Cells Contact System, CCS). The harness isolation plate mainly includes components such as palladium sheets, nickel sheets, thermistors, and harnesses. During the assembly process, a robotic arm grabs the harness isolation plate to assemble the harness isolation plate into the battery pack. However, due to the generally low strength of the components within the harness isolation plate, damage easily occurs during grabbing, significantly reducing the quality and efficiency of assembly. Therefore, reducing damage to the components within the harness isolation plate during the assembly process is a critical issue that urgently needs to be addressed.

### SUMMARY

In view of the preceding technical problems, this disclosure provides a harness isolation plate assembly mechanism and a battery production line, thereby achieving damage-free assembly of the harness isolation plate.

According to a first aspect, this disclosure provides a harness isolation plate assembly mechanism including: a suction tool including a first bracket and a suction assembly, where the first bracket is provided with a first connection structure, the first connection structure being configured to connect to a transport device to move the first bracket, and an extension surface of the first bracket being parallel to an extension surface of a harness isolation plate to be grabbed; and the suction assembly is fixed on the extension surface of the first bracket and is arranged to avoid a harness region of the harness isolation plate, and the suction assembly is configured to adsorb or release the harness isolation plate.

Since the first bracket is provided with the first connection structure connected to the transport device, the transport device can drive the suction tool to move via the first connection structure. The first bracket is provided with the suction assembly avoiding the harness region, and when the suction assembly adsorbs the harness isolation plate, the suction assembly avoids the harness region with lowest strength and only becomes in contact with non-harness regions with higher strength on the harness isolation plate, thereby avoiding damage to the harness. Additionally, compared to the traditional robotic arm grabbing the harness isolation plate, using the suction assembly to adsorb the harness isolation plate allows the force required to lift the harness isolation plate to be distributed across the extension surface of the harness isolation plate, avoiding damage to the harness isolation plate due to concentrated force.

In some embodiments, the suction assembly is arranged at a position on the first bracket away from an edge and corresponds to a palladium sheet of the harness isolation plate.

By arranging the suction assembly at the position on the first bracket away from the edge, the suction assembly is close to the center of the first bracket. By arranging the harness isolation plate corresponding to the palladium sheet, the suction assembly only becomes in contact with the palladium sheet during adsorption, so that a force-bearing point is concentrated only on the palladium sheet, which has the highest strength among the components of the harness isolation plate, avoiding components with lower strength on the harness isolation plate and preventing damage to the low-strength components due to the adsorption force.

In some embodiments, the suction assembly includes a suction cup and a suction cup base, the suction cup base being connected to the first bracket, and the suction cup being arranged on the suction cup base and configured to adsorb or release the harness isolation plate.

The suction cup is arranged on the first bracket via the suction cup base, the suction cup is arranged to avoid the harness region of the harness isolation plate, and the suction cup can adsorb or release the harness isolation plate. During adsorption, the suction cup only becomes in contact with the non-harness region with higher strength, thereby avoiding damage to the harness region with the lowest strength.

In some embodiments, the first bracket is provided with multiple groups of first fixing structures, and the suction cup base is detachably connected to the first bracket via any one group of the first fixing structures.

Since the suction cup base is detachably connected to the first bracket via the first fixing structure, the suction cup base is provided with the suction cup. The suction cup is frequently in contact with the harness isolation plate, resulting in wear. Under the condition that the suction cup is damaged, the suction cup base can be removed from the first fixing structure and replaced with a new suction cup, avoiding delays in assembly progress due to suction cup damage. Moreover, since the first bracket is provided with multiple groups of first fixing structures, the suction cup base can be detached from one first fixing structure and installed on another first fixing structure, thereby changing an adsorption position of the suction cup, enabling the suction cup to avoid harness regions of various models of harness isolation plates, enhancing compatibility of the suction tool, and achieving rapid type switching.

In some embodiments, the first fixing structure are multiple groups of suction cup base mounting holes arranged at different positions on the first bracket.

Since the first fixing structure includes the suction cup base mounting holes, the suction cup base cooperates with the suction cup base mounting holes so as to achieve detachment and installation, allowing convenient and rapid insertion and extraction, and enabling quick adjustment of the suction cup position.

In some embodiments, the suction cup base is movably connected to the first bracket, so that the suction cup base is movable relative to the first bracket to at least two different positions.

Since the suction cup base is movably connected to the first bracket, the suction cup base is provided with the suction cup, and the suction cup base moves relative to the first bracket, thereby changing the position of the suction cup. Under the condition that a model of the harness isolation plate to be adsorbed changes, the suction cup base can be moved to enable the suction cup to avoid harness regions of different types of harness isolation plates, enhancing the compatibility of the suction tool.

In some embodiments, the suction tool further includes a movable mechanism, the movable mechanism being connected to the suction cup base and configured to drive the suction cup base to be movable relative to the first bracket.

The suction cup base is movable relative to the first bracket via the movable mechanism, and the suction cup base is provided with the suction cup, thereby driving the suction cup to move relative to the first bracket. Under the condition that the model of the harness isolation plate to be adsorbed changes, the suction cup base can be moved to enable the suction cup to avoid harness regions of different types of harness isolation plates, enhancing the compatibility of the suction tool.

In some embodiments, the movable mechanism includes a slide rail arranged on the first bracket and a cylinder capable of driving the suction cup base to move, the suction cup base being slidably connected to the slide rail.

By arranging the slide rail on the first bracket, the suction cup base is slidably connected to the slide rail, achieving movement of the suction cup base relative to the first bracket. Simply pushing the suction cup base can change the position of the suction cup, being compatible with different types of harness isolation plates. The operation is simple, type switching is fast, and time and effort are saved. By providing the cylinder capable of driving the suction cup base, electrical operation can be achieved, offering convenience and avoiding errors from manual operation.

In some embodiments, the suction tool further includes a first positioning structure arranged on the first bracket, the first positioning structure having a positioning portion arranged along a suction direction of the suction assembly, and the first positioning structure being configured to match a corresponding structure of another tool to prevent relative displacement between the suction tool and the another tool along a non-suction direction.

By arranging the first positioning structure on the first bracket, and since the first positioning structure can match the corresponding structure of the other tool, positioning between the suction tool and the other tool is achieved. Since the first positioning structure has the positioning portion arranged along the suction direction of the suction assembly, the suction tool and the another tool cannot displace along the non-suction direction. The structure is simple, and assembly precision is high.

In some embodiments, the first positioning structure includes a positioning pin oriented toward the suction direction of the suction assembly, the positioning pin being configured to cooperate with a corresponding structure of an assembly platform to prevent relative displacement between the suction tool and the assembly platform along the non-suction direction.

Since the positioning pin cooperates with the corresponding structure of the assembly platform, and the positioning pin is oriented toward the suction direction of the suction assembly, the suction tool and the assembly platform can be positioned via the positioning pin, preventing displacement between the suction tool and the assembly platform along the non-suction direction.

In some embodiments, the first positioning structure includes a positioning groove arranged on the first bracket, the positioning groove being configured to cooperate with a corresponding structure of a positioning platform to prevent relative displacement between the suction tool and the positioning platform along the non-suction direction.

Since the first bracket is provided with the positioning groove, the positioning groove can cooperate with the corresponding structure of the positioning platform, and after the corresponding structure of the positioning platform cooperates with the positioning groove, displacement between the suction tool and the positioning platform along the non-suction direction is prevented.

In some embodiments, the suction tool further includes a buffer member, the buffer member being arranged on a side of the suction assembly facing the harness isolation plate, and under the condition that the suction assembly adsorbs the harness isolation plate, the buffer member abutting against the harness isolation plate.

Since the buffer member is provided on the side of the suction assembly facing the harness isolation plate, when the suction assembly adsorbs the harness isolation plate, the harness isolation plate directly becomes in contact with the buffer member rather than the suction assembly, and the buffer member disperses and cushions pressure between the harness isolation plate and the suction assembly.

In some embodiments, the buffer member is an elastic pad arranged on the suction assembly, the elastic pad is provided with multiple suction holes, and the suction assembly adsorbs the harness isolation plate through the suction holes.

Since the elastic pad is provided on the side of the suction assembly facing the harness isolation plate, during adsorption, the elastic pad directly becomes in contact with the harness isolation plate, dispersing and cushioning the pressure between the harness isolation plate and the suction assembly through the elasticity of the elastic pad. The elastic pad is provided with the suction holes, enabling the suction assembly to perform normal adsorption through the suction holes.

In some embodiments, the suction tool further includes a vacuum generator assembly arranged on the first bracket, the vacuum generator assembly being in communication with the suction assembly and configured to provide power to the suction assembly for adsorbing the harness isolation plate.

By arranging the vacuum generator assembly on the first bracket, power required for the suction assembly to adsorb the harness isolation plate is provided.

In some embodiments, the vacuum generator assembly includes a vacuum generator, a pneumatic switch valve, and a pneumatic duplex component, the vacuum generator being sequentially connected to the suction assembly via the pneumatic duplex component and the pneumatic switch valve.

Power for the suction assembly to adsorb the harness isolation plate is provided through the vacuum generator. The pneumatic duplex component controls an opening degree of the pneumatic switch valve based on the air pressure within the suction assembly, thereby stabilizing the air pressure within the suction assembly. The pneumatic duplex component is further configured to filter air, filtering air from the suction assembly.

In some embodiments, a safety hole is provided on the first bracket at a position corresponding to the suction assembly, and the safety hole is in communication with the suction assembly.

By providing the safety hole in communication with the suction assembly on the first bracket, air circulation is maintained, preventing excessively low air pressure inside the suction assembly.

In some embodiments, the first connection structure is a first lifting ring arranged on the first bracket.

Connection of the first lifting ring and the transport device allows the suction tool to be hoisted to a designated position.

In some embodiments, the harness isolation plate assembly mechanism further includes a positioning tool arranged on a positioning platform, the positioning tool includes a second bracket and a second positioning structure, the second bracket is configured to support the harness isolation plate; and the second positioning structure is arranged on the second bracket and configured to cooperate with the first positioning structure to prevent relative displacement between the suction tool and the positioning platform along the non-suction direction.

Since the positioning tool includes the second positioning structure, and the second positioning structure can cooperate with the first positioning structure, enabling mutual positioning between the positioning tool and the suction tool. Since the first positioning structure has the positioning portion arranged along the suction direction of the suction assembly, relative displacement between the suction tool and the positioning platform along the non-suction direction can be prevented.

In some embodiments, the second positioning structure is a top post arranged on the second bracket, the top post protrudes upward along the second bracket, and under the condition that the top post cooperates with the first positioning structure, the top post supports and lifts the suction tool, so that the suction assembly and an upper surface of the second bracket have a clearance gap.

Since the second bracket is provided with the top post protruding upward, after the top post cooperates with the first positioning structure, displacement between the positioning tool and the suction tool in the non-suction direction can be prevented, and the suction tool can be lifted by the top post, maintaining a safety gap between the positioning tool and the suction tool.

In some embodiments, the positioning tool further includes a limiting member arranged on the second bracket, the limiting member being configured to enclose a positioning space matching an outer contour of the harness isolation plate.

By arranging the limiting member on the second bracket, and since the limiting member encloses the positioning space matching the outer contour of the harness isolation plate, after the suction tool moves the harness isolation plate to the positioning tool and positioning is achieved through cooperation between the first positioning structure and the second positioning structure, the harness isolation plate is released so that the harness isolation plate to fall into the positioning space enclosed by the limiting member, achieving position correction of the harness isolation plate.

In some embodiments, a side of the limiting member facing the positioning space is provided with a guide slope, and an upper end of the guide slope is inclined toward a direction away from the positioning space, so that a planar contour of an end of the positioning space away from the second bracket is larger than a planar contour of an end of the positioning space close to the second bracket.

Since the guide slope is provided on the side of the limiting member facing the positioning space, and the upper end of the guide slope is inclined toward the direction away from the positioning space, even if the falling harness isolation plate has a certain deviation relative to the positioning space, the harness isolation plate can be easily guided into the positioning space.

In some embodiments, the limiting member is slidably connected to the second bracket, allowing the limiting member to slide and adjust a size of the positioning space.

By slidably connecting the limiting member to the second bracket, the limiting member can slide relative to the second bracket to change a position of the limiting member relative to the second bracket, thereby changing a distance between the limiting members and adjusting the size of the positioning space. This allows the limiting member to be suitable for positioning harness isolation plates of different sizes, offering strong compatibility.

In some embodiments, the second bracket is provided with multiple support members, the multiple support members are arranged to avoid the harness region of the harness isolation plate to support the harness isolation plate.

By arranging the support members avoiding the harness region on the second bracket, after the harness isolation plate is released and falls onto the positioning tool, the harness region with the lowest strength on the harness isolation plate is suspended, and only non-harness regions are in contact with the support members. This prevents impact force from damaging the harness region when the harness isolation plate falls onto the positioning tool.

In some embodiments, the second bracket is further provided with a second connection structure, the second connection structure being configured to connect to the transport device to move the positioning tool.

The transport device can drive the positioning tool to move via the second connection structure.

In some embodiments, the positioning tool further includes support legs, the support legs being connected to the second bracket to support the second bracket and adjust a height of the second bracket.

By arranging the support legs on the second bracket, support for the positioning tool is achieved. Additionally, the support legs can be further configured to adjust the height of the second bracket, facilitating height adaptation between the positioning tool and the suction tool.

In some embodiments, the harness isolation plate assembly mechanism further includes a loading tray, the loading tray being arranged on a loading platform and configured to support the harness isolation plate to be adsorbed; and the loading tray being provided with a third positioning structure configured to cooperate with the first positioning structure to prevent relative displacement between the suction tool and the loading platform along the non-suction direction.

Since the loading tray is provided with the third positioning structure cooperating with the first positioning structure, and the first positioning structure is arranged on the suction tool, after the first positioning structure cooperates with the third positioning structure, a position between the suction tool and the loading tray is fixed. Since the first positioning structure has the positioning portion arranged along the suction direction of the suction assembly, relative displacement between the suction tool and the loading platform along the non-suction direction can be prevented.

According to a second aspect, this disclosure provides a battery production line including: an assembly platform; the harness isolation plate assembly mechanism as described above; and a transport device, the transport device being at least configured to transport the harness isolation plate assembly mechanism to the assembly platform.

Since the battery production line is equipped with the harness isolation plate assembly mechanism described above, during adsorption of the harness isolation plate, low-strength regions on the harness isolation plate can be avoided, and the force on the harness isolation plate is dispersed, achieving damage-free assembly of the harness isolation plate.

In some embodiments, the harness isolation plate assembly mechanism includes a suction tool, a positioning tool, and a loading tray; and the battery production line further includes a loading platform and a positioning platform, the loading tray being arranged on the loading platform, the positioning tool being arranged on the positioning platform; and the transport device being at least configured to transport the suction tool from the loading platform to the positioning platform and from the positioning platform to the assembly platform.

The suction tool adsorbs the harness isolation plate from the loading tray on the loading platform, the transport device moves the suction tool to the positioning platform, the suction tool releases the harness isolation plate to the positioning tool on the positioning platform for positioning, and the suction tool adsorbs the positioned harness isolation plate to the assembly platform to complete subsequent assembly. This achieves precise assembly.

In some embodiments, the suction tool is provided with a first positioning structure, the positioning tool is provided with a second positioning structure, the loading tray is provided with a third positioning structure, and the assembly platform is provided with a fourth positioning structure; where the first positioning structure is capable of cooperating with the second positioning structure to restrict relative displacement between the suction tool and the positioning tool; the first positioning structure is capable of cooperating with the third positioning structure to restrict relative displacement between the suction tool and the loading tray; and the first positioning structure is capable of cooperating with the fourth positioning structure to restrict relative displacement between the suction tool and the assembly platform.

Positioning between the suction tool and the positioning tool can be achieved through cooperation between the first positioning structure and the second positioning structure; positioning between the suction tool and the loading tray can be achieved through cooperation between the first positioning structure and the third positioning structure; and positioning between the suction tool and the assembly platform can be achieved through cooperation between the first positioning structure and the fourth positioning structure. This achieves precise assembly.

The foregoing description is merely an overview of the technical solution of this disclosure. For a better understanding of the technical means in this disclosure so that they can be implemented according to the content of the specification, and to make the above and other objectives, features, and advantages of this disclosure more obvious and easier to understand, the following describes specific embodiments of this disclosure.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred implementations and are not intended to limit this disclosure. Moreover, throughout the accompanying drawings, the same reference signs represent the same parts. In the accompanying drawings:
FIG. 1 is a schematic diagram of a harness isolation plate according to some embodiments of this disclosure;
FIG. 2 is a three dimensional diagram of a suction tool of a harness isolation plate according to some embodiments of this disclosure;
FIG. 3 is a side view of a suction tool of a harness isolation plate according to some embodiments of this disclosure;
FIG. 4 is a bottom view of a suction tool of a harness isolation plate according to some embodiments of this disclosure;
FIG. 5 is a three dimensional diagram of a positioning tool for a harness isolation plate according to some embodiments of this disclosure;
FIG. 6 is a side view of a positioning tool of a harness isolation plate according to some embodiments of this disclosure;
FIG. 7 is a schematic diagram of cooperation between a suction tool and a positioning tool according to some embodiments of this disclosure; and
FIG. 8 is a schematic diagram of a suction tool operating on an assembly platform according to some embodiments of this disclosure.

Reference signs are described as follows:
10. harness isolation plate; 101. harness; 102. palladium sheet; 103. plastic plate; 12. suction tool; 121. first bracket; 122. suction assembly; 1221. suction cup; 1222. suction cup base mounting hole; 123. first connection structure; 1231. first lifting ring; 1232. handle; 124. positioning pin; 125. buffer member; 1251. suction hole; 126. vacuum generator; 127. pneumatic switch valve; 128. pneumatic duplex component; 129. safety hole; 130. positioning groove; 14. positioning tool; 141. second bracket; 142. second positioning structure; 143. limiting member; 144. oblong hole; 145. support member; 146. second connection structure; 147. support leg; 16. assembly platform; and 161. fourth positioning structure.

### DESCRIPTION OF EMBODIMENTS

The following will describe the embodiments of the technical solutions of this disclosure in detail with reference to the accompanying drawings. The following embodiments are only for a clearer explanation of the technical solutions of this disclosure, and therefore they are only examples and cannot be used to limit the scope of protection of this disclosure.

Unless otherwise defined, all technical and scientific terms used herein have the same meanings as commonly understood by persons of ordinary skill in the art to which this disclosure belongs; the terms used herein are only for the purpose of describing specific embodiments and are not intended to limit this disclosure; the terms "include" and "have" and any variations thereof in this disclosure are intended to cover non-exclusive inclusions.

In the description of the embodiments of this disclosure, the technical terms "first", "second", "third", and the like are only used to distinguish different objects and cannot be understood as indicating or implying relative importance or implicitly indicating the number, specific order, or primary-secondary relationship of the indicated technical features. In the description of the embodiments of this disclosure, "multiple" means more than two unless otherwise explicitly specified.

As mentioned herein, "embodiment" means that specific features, structures, or characteristics described with reference to an embodiment can be included in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this disclosure, the technical terms "length", "width", "thickness", "upper", "lower", "front", "rear", "left", "right", "vertical", "horizontal", "top", "bottom", "inner", "outer", "circumferential", and the like indicating orientation or positional relationships are based on the orientation or positional relationships shown in the drawings, and are only for the convenience of describing the embodiments of this disclosure and simplifying the description, rather than indicating or implying that the apparatuses or elements referred to must have specific orientations, be constructed, operated, or used in specific orientations, and therefore should not be understood as limiting the embodiments of this disclosure.

In the description of the embodiments of this disclosure, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this disclosure as appropriate to specific situations.

In the description of the embodiments of this disclosure, unless otherwise specified and defined explicitly, the technical term "contact" should be broadly understood, and may be direct contact or contact through an intermediate medium layer, may be contact between two objects with essentially no interaction force, or may be contact between two objects with interaction force.

This disclosure will be described in detail below.

Currently, the application of new energy batteries in life and industry is becoming increasingly widespread. New energy batteries have been widely used in energy storage power supply systems such as hydroelectric power plants, thermal power plants, wind power plants, and solar power plants, as well as in many other fields including electric transportation tools such as electric bicycles, electric motorcycles, and electric vehicles, and aerospace.

In the embodiments of this disclosure, a battery may include one or more battery cells to provide voltage and capacity. When there are multiple battery cells, the multiple battery cells are connected in series, parallel, or series-parallel through bus-bar.

In some embodiments, the battery may be a battery pack (battery Pack), the battery pack includes a box and one or more battery cells, and the battery cells are accommodated in the box.

In a traditional traction battery pack, a harness busbar is typically provided to connect battery cell groups in series and parallel, each harness in the harness busbar reaches an electrode, and temperature sensors and voltage sampling harnesses are arranged on the surface of the harness busbar. This arrangement not only results in complex wiring but also occupies a significant amount of space.

To replace the original complex wiring, integrated processing has been applied to traction battery packs in the prior art. After integration, battery cell groups within the battery pack are connected in series and parallel via a harness isolation plate (Cells Contact System, CCS). The harness isolation plate mainly includes components such as palladium sheets, nickel sheets, thermistors, and harnesses. During the assembly process, a robotic arm grabs the harness isolation plate to assemble the harness isolation plate into the battery pack. However, due to the generally low strength of the components within the harness isolation plate, damage easily occurs during grabbing, significantly reducing the quality and efficiency of assembly. Therefore, reducing damage to the components within the harness isolation plate during the assembly process is a critical issue that urgently needs to be addressed.

The inventors of this disclosure have noted that when grabbing the harness isolation plate with a robotic arm, a clamping end of the robotic arm compresses components on the harness isolation plate, causing excessive local force on the harness isolation plate and resulting in damage to the harness isolation plate. Currently, most existing automated assembly mechanisms for harness isolation plates do not take into account for the issue that the harness isolation plates themselves have low strength, making it difficult to guarantee the quality of the assembled harness isolation plates.

In response to the deficiencies in the prior art mentioned above, the inventors of this disclosure have found that if low-strength regions on the harness isolation plate can be avoided and the force required to lift the harness isolation plate can be distributed on an extension surface of the harness isolation plate, the assembly of the harness isolation plate can be completed without damaging the harness isolation plate.

Based on this design concept, the inventors of this disclosure have designed a harness isolation plate assembly mechanism including: a suction tool including a first bracket and a suction assembly; where the first bracket is provided with a first connection structure, the first connection structure being configured to connect to a transport device to move the first bracket, and an extension surface of the first bracket being parallel to an extension surface of a harness isolation plate to be grabbed; and the suction assembly is fixed on the extension surface of the first bracket and is arranged to avoid a harness region of the harness isolation plate, and the suction assembly is configured to adsorb or release the harness isolation plate.

Since the first bracket is provided with the first connection structure connected to the transport device, the transport device can drive the suction tool to move via the first connection structure. The first bracket is provided with the suction assembly avoiding the harness region, and when the suction assembly adsorbs the harness isolation plate, the suction assembly avoids the harness region with lowest strength and only becomes in contact with non-harness regions with higher strength on the harness isolation plate, thereby avoiding damage to the harness. Additionally, compared to the traditional robotic arm grabbing the harness isolation plate, using the suction assembly to adsorb the harness isolation plate allows the force required to lift the harness isolation plate to be distributed across the extension surface of the harness isolation plate, avoiding damage to the harness isolation plate due to concentrated force.

The harness isolation plate assembly mechanism provided in the embodiments of this disclosure may be used for, but is not limited to, the harness isolation plate, and may also be used for assembling other suitable workpieces, such as printed circuit boards and flexible circuit boards.

The harness isolation plate assembly mechanism provided in the embodiments of this disclosure may be used in production lines such as battery production lines, for adsorbing workpieces in intermediate stages of production and moving the workpieces to other locations.

The following description is provided with reference to the accompanying drawings.

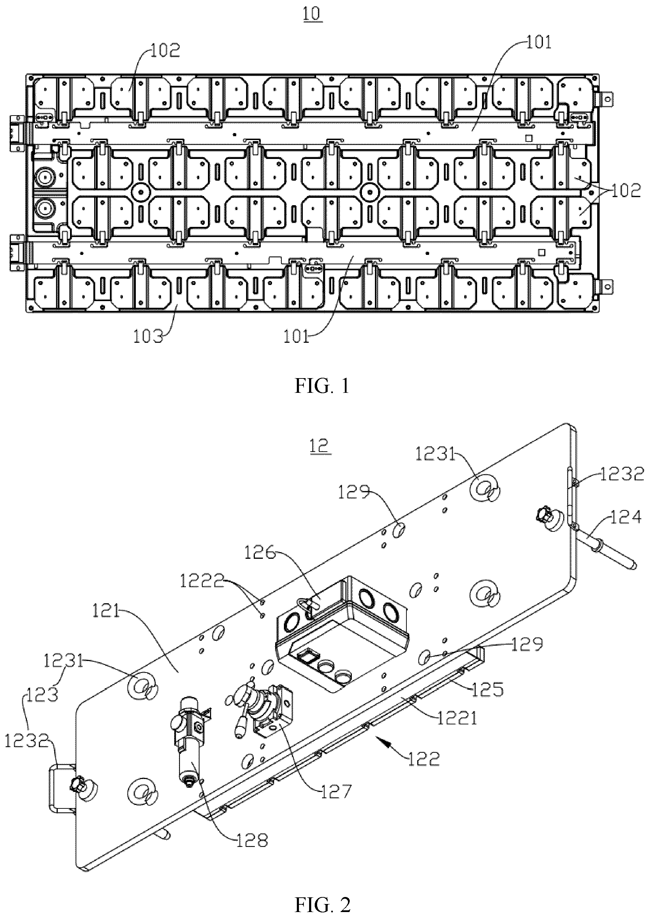

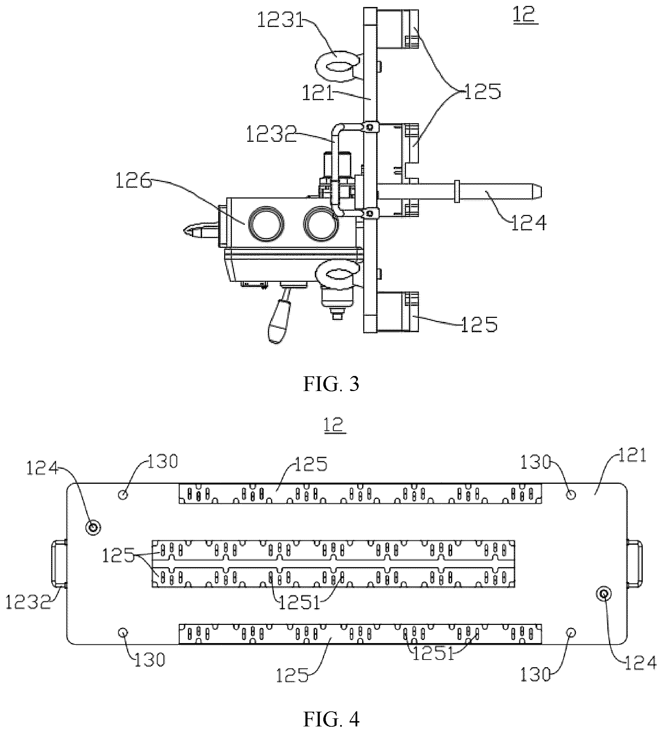

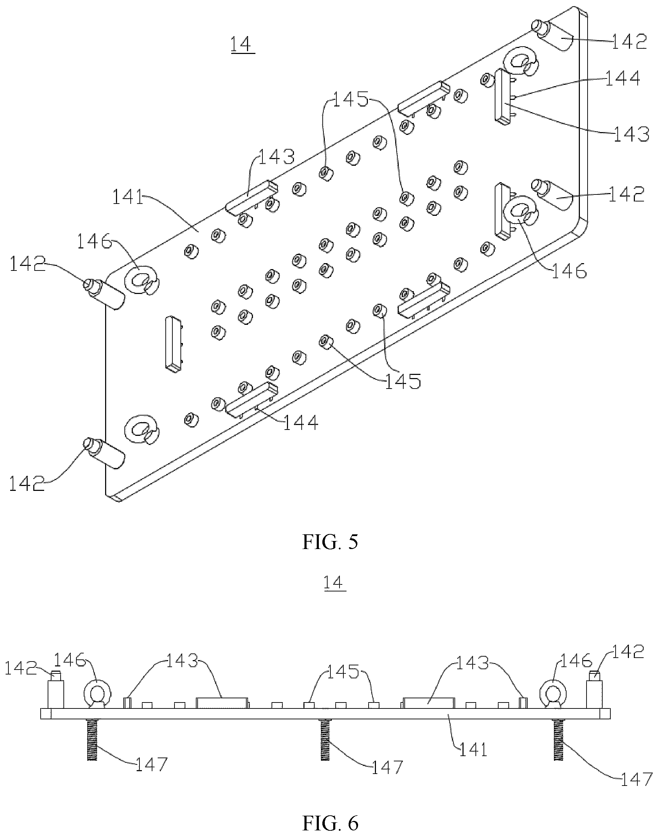

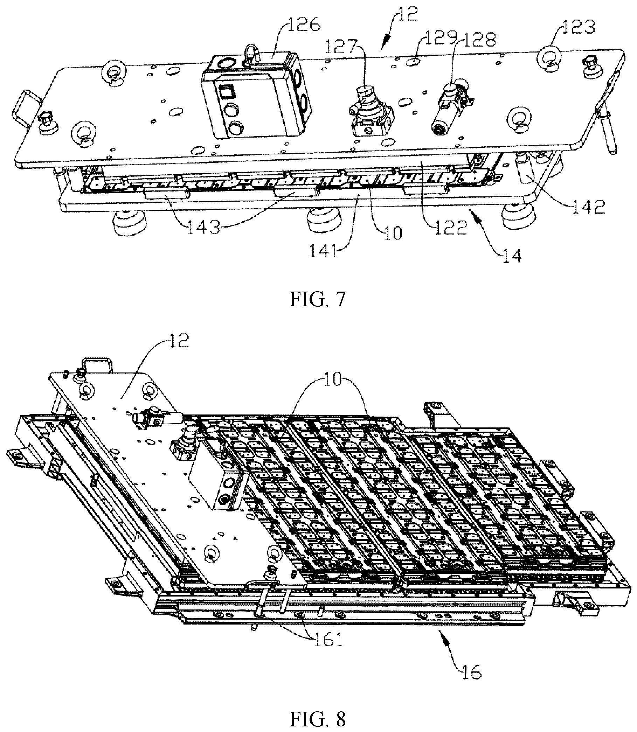

FIG. 1 is a schematic diagram of a harness isolation plate according to some embodiments of this disclosure; FIG. 2 is a three dimensional diagram of a suction tool of a harness isolation plate according to some embodiments of this disclosure; FIG. 3 is a side view of a suction tool of a harness isolation plate according to some embodiments of this disclosure; FIG. 4 is a bottom view of a suction tool of a harness isolation plate according to some embodiments of this disclosure; FIG. 5 is a three dimensional diagram of a positioning tool of a harness isolation plate according to some embodiments of this disclosure; FIG. 6 is a side view of a positioning tool of a harness isolation plate according to some embodiments of this disclosure; FIG. 7 is a schematic diagram of cooperation between a suction tool and a positioning tool according to some embodiments of this disclosure; and FIG. 8 is a schematic diagram of a suction tool operating on an assembly platform according to some embodiments of this disclosure.

As shown in FIG. 2 to FIG. 4, a harness isolation plate 10 assembly mechanism includes: a suction tool 12 including a first bracket 121 and a suction assembly 122; where the first bracket 121 is provided with a first connection structure 123, the first connection structure 123 being configured to connect to a transport device to move the first bracket 121, and an extension surface of the first bracket 121 being parallel to an extension surface of a harness isolation plate 10 to be grabbed; and the suction assembly 122 is fixed on the extension surface of the first bracket 121 and is arranged to avoid a harness region of the harness isolation plate 10, and the suction assembly 122 is configured to adsorb or release the harness isolation plate 10. The harness region is a region on the harness isolation plate 10 in which all harnesses 101 are located.

The harness isolation plate 10 assembly mechanism provided in this disclosure is applicable to the harness isolation plate 10, printed circuit boards, flexible circuit boards, and the like. Taking the harness isolation plate as an example, as shown in FIG. 1, the harness isolation plate 10 consists of nickel sheets, palladium sheets 102, thermistors, harnesses 101, and a plastic plate 103. The nickel sheets, the palladium sheets 102, the thermistors, and the harnesses 101 are all arranged on the plastic plate 103, with nickel sheets and palladium sheets 102 arranged on two sides of the harness 101 and each palladium sheet 102 connected to the harness 101. Compared to other plates, the components constituting the harness isolation plate 10 are directly fixed on the plastic plate 103, with no protective layers such as a hot-pressed protective film provided on a surface, meaning that the components on the harness isolation plate 10 are exposed and highly susceptible to damage. Among the components constituting the harness isolation plate 10, the harnesses 101 have the lowest strength, while the palladium sheets 102 and the plastic plate 103 supporting the components have relatively high strength.

Continuing to refer to FIG. 2 to FIG. 4, the first bracket 121 may be configured as a plate shape, and a surface area of the first bracket 121 is not less than a surface area of the harness isolation plate 10. The suction assembly 122 is arranged on one side surface of the first bracket 121, and the first connection structure 123 is arranged on the other side surface of the first bracket 121. The transport device is connected to the first connection structure 123 and drives the suction tool 12 to move via the first connection structure 123. The first bracket 121 is configured as a straight plate, making the extension surface of the first bracket 121 a flat surface.

The suction assembly 122 is fixed on a surface of the first bracket 121 away from the first connection structure 123, and the suction assembly corresponds to regions of higher strength on the harness isolation plate 10, the high-strength regions including the plastic plate 103 and the palladium sheets 102. The suction assembly avoids the harness region with lower strength on the harness isolation plate 10. The suction assembly 122 may be evacuated to adsorb the harness isolation plate 10, or the suction assembly 122 may be turned off to release the harness isolation plate 10. A surface of the suction assembly 122 being in contact with the harness isolation plate 10 is configured as a flat surface, and the flat surface is parallel to the extension surface of the first bracket 121. When the suction assembly 122 adsorbs the harness isolation plate 10, the extension surface of the first bracket 121 is parallel to the extension surface of the harness isolation plate 10.

Since the first bracket 121 is provided with the first connection structure 123 connected to the transport device, the transport device can drive the suction tool 12 to move via the first connection structure 123. The first bracket 121 is provided with the suction assembly 122 avoiding the harness region, and when the suction assembly 122 adsorbs the harness isolation plate 10, the suction assembly 122 avoids the harness region with lowest strength and only becomes in contact with non-harness regions with higher strength on the harness isolation plate 10, thereby avoiding damage to the harness 101. Additionally, compared to the traditional robotic arm grabbing the harness isolation plate 10, using the suction assembly 122 to adsorb the harness isolation plate 10 allows the force required to lift the harness isolation plate 10 to be distributed across the extension surface of the harness isolation plate 10, avoiding damage to the harness isolation plate 10 due to concentrated force.

In some embodiments, the suction assembly 122 corresponds to at least one of the palladium sheet 102 and the plastic plate 103 of the harness isolation plate 10. Optionally, the suction assembly 122 is arranged at a position on the first bracket 121 away from an edge and corresponds to the palladium sheet 102 of the harness isolation plate 10. An edge of the suction assembly 122 is away from an edge of the first bracket 121, so that the suction assembly 122 is located at a position close to a center of the first bracket 121. This makes the center of gravity of the suction tool 12 concentrated and close to the center. Therefore, during the process of the transport device transporting the suction tool 12, the shape of the suction tool 12 can be kept stable, enabling the suction tool 12 to maintain a state parallel to the harness isolation plate 10. When the suction assembly 122 adsorbs the harness isolation plate 10, the suction assembly 122 can be distributed across a surface of the first bracket 121, each suction assembly 122 corresponding to one palladium sheet 102 of the harness isolation plate 10, so that an adsorption force provided by the suction assembly 122 is applied only to the palladium sheet 102 with higher strength.

By arranging the suction assembly 122 at the position on the first bracket 121 away from the edge, the suction assembly 122 is close to the center of the first bracket 121. By arranging the harness isolation plate 10 corresponding to the palladium sheet 102, the suction assembly 122 only becomes in contact with the palladium sheet 102 during adsorption, so that a force-bearing point is concentrated only on the palladium sheet 102, which has the highest strength among the components of the harness isolation plate 10, avoiding components with lower strength on the harness isolation plate 10 and preventing damage to the low-strength components due to the adsorption force.

In some embodiments, the suction assembly 122 includes a suction cup 1221 and a suction cup base, the suction cup base being connected to the first bracket 121, and the suction cup 1221 being arranged on the suction cup base and configured to adsorb or release the harness isolation plate 10. A pattern in which multiple suction cups 1221 are arranged on one suction cup base may be adopted, or a pattern in which the suction cup base is arranged in a one-to-one correspondence with the suction cup 1221 may be adopted. The suction cup 1221 is arranged on the suction cup base to avoid the harness region of the harness isolation plate 10 and is connected to the first bracket 121 via the suction cup base. When the suction tool 12 is used to adsorb the harness isolation plate 10, the suction cup 1221 directly becomes in contact with the harness isolation plate 10, airflow within the suction cup 1221 is used to adsorb the harness isolation plate 10, and turning off the airflow within the suction cup 1221 releases the harness isolation plate 10. Further, the suction cup 1221 corresponds to at least one of the palladium sheet 102 and the plastic plate 103 of the harness isolation plate 10. Each suction cup 1221 may be arranged corresponding to one palladium sheet 102.

The suction cup 1221 is arranged on the first bracket 121 via the suction cup base, the suction cup 1221 is arranged to avoid the harness region of the harness isolation plate 10, and the suction cup 1221 can adsorb or release the harness isolation plate 10. During adsorption, the suction cup 1221 only becomes in contact with the non-harness region with higher strength, thereby avoiding damage to the harness region with the lowest strength.

In some embodiments, the first bracket 121 is provided with multiple groups of first fixing structures, and the suction cup base is detachably connected to the first bracket 121 via any one group of the first fixing structures. Since harness regions and dimensions vary among different models of harness isolation plates 10, to enhance compatibility of the suction tool 12 with different models of wiring harness isolation boards 10, multiple groups of suction assemblies 122 may be configured according to models of the harness isolation plate 10, so that each group of suction assemblies 122 is suitable for different models of harness isolation plates 10.

Specifically, corresponding to different types of harness isolation plates 10, lengths of the suction cup bases are varied, and the multiple suction cups 1221 are arranged on each suction cup base. A length of each suction cup base matches a length of the harness isolation plate 10. At least two suction cup bases form a group, each group of suction cup bases is mounted on the first bracket 121 via the first fixing structure, and after installation, the suction cup bases can avoid the harness region of the harness isolation plate 10. Optionally, corresponding to different models of harness isolation plates 10, the suction assembly 122 is configured such that the suction cup 1221 is arranged on the suction cup base avoiding the harness region, each group of suction assemblies 122 can avoid the harness region of one type of harness isolation plate 10, and the suction assembly 122 is mounted on the first bracket 121 via the first fixing structure. Similarly, optionally, the suction assembly 122 is configured such that at least one suction cup 1221 is arranged on one suction cup base, and multiple groups of identical suction assemblies 122 are produced. Based on a dimension of the harness isolation plate 10, a number of suction assemblies 122 mounted on the first bracket 121 is increased or decreased, so that a combination of the suction assemblies 122 corresponds to the dimension of the harness isolation plate 10.

The first fixing structure is arranged on the first bracket 121 avoiding the harness region, and multiple groups of first fixing structures are provided based on positions of harness regions of different models of harness isolation plates 10, so that each group of first fixing structures can respectively avoid the harness region of one model of harness isolation plate 10. During use, a suction assembly 122 corresponding to a dimension of the harness isolation plate 10 is selected, which may be that a dimension of a suction assembly 122 corresponds to the dimension of the harness isolation plate 10, or may be that a dimension of a combination of multiple groups of suction assemblies 122 corresponds to the dimension of the harness isolation plate 10. Based on the harness region of the harness isolation plate 10, a first fixing structure capable of avoiding the harness region is selected, and the suction assembly 122 is mounted on the first bracket 121 via this first fixing structure, so that a length of the suction assembly 122 is suitable for the harness isolation plate 10, and a mounting position of the suction assembly 122 avoids the harness region of the harness isolation plate 10.

Since the suction cup base is detachably connected to the first bracket 121 via the first fixing structure, the suction cup base is provided with the suction cup 1221. The suction cup 1221 is frequently in contact with the harness isolation plate 10, resulting in wear. Under the condition that the suction cup 1221 is damaged, the suction cup base can be removed from the first fixing structure and replaced with a new suction cup 1221, avoiding delays in assembly progress due to suction cup 1221 damage. Moreover, since the first bracket 121 is provided with multiple groups of first fixing structures, the suction cup base can be detached from one first fixing structure and installed on another first fixing structure, thereby changing an adsorption position of the suction cup 1221, enabling the suction cup 1221 to avoid harness regions of various models of harness isolation plates 10, enhancing compatibility of the suction tool 12, and achieving rapid type switching.

In some embodiments, the first fixing structure are multiple groups of suction cup base mounting holes 1222 arranged at different positions on the first bracket 121. Based on different models of harness isolation plates 10, multiple groups of suction cup base mounting holes 1222 are provided on the first bracket 121, each group of suction cup base mounting holes 1222 being arranged on the first bracket 121 to avoid the harness region of a different model of harness isolation plate 10. The suction cup base is provided with an insertion piece, the insertion piece of the suction cup base can be inserted into the suction cup base mounting hole 1222 so as to achieving connection between the suction assembly 122 and the first bracket 121.

Since the first fixing structure includes the suction cup base mounting holes 1222, the suction cup base cooperates with the suction cup base mounting holes 1222 so as to achieve detachment and installation, allowing convenient and rapid insertion and extraction, and enabling quick adjustment of a position of the suction cup 1221.

In some embodiments, the suction cup base is movably connected to the first bracket 121, so that the suction cup base is movable relative to the first bracket 121 to at least two different positions. The suction cup base is movably connected to the first bracket 121, and the suction cup base moves relative to the first bracket 121, allowing the suction cup bases to move closer to or farther from each other, thereby changing a distance between the suction cups 1221, and enabling the suction cups 1221 to avoid the harness region of the harness isolation plate 10.

Since the suction cup base is movably connected to the first bracket 121, the suction cup base is provided with the suction cup 1221, and the suction cup base moves relative to the first bracket 121, thereby changing the position of the suction cup 1221. Under the condition that a model of the harness isolation plate 10 to be adsorbed changes, the suction cup base can be moved to enable the suction cup 1221 to avoid harness regions of different types of harness isolation plates 10, enhancing the compatibility of the suction tool 12.

In some embodiments, the suction tool 12 further includes a movable mechanism, the movable mechanism being connected to the suction cup base and configured to drive the suction cup base to be movable relative to the first bracket 121. The suction cup base is movable relative to the first bracket 121 via the movable mechanism, and the suction cup base is provided with the suction cup 1221, thereby driving the suction cup 1221 to move relative to the first bracket 121. Under the condition that the model of the harness isolation plate 10 to be adsorbed changes, the suction cup base can be moved to enable the suction cup 1221 to avoid harness regions of different types of harness isolation plates 10, enhancing the compatibility of the suction tool 12.

In some embodiments, the movable mechanism includes a slide rail arranged on the first bracket 121 and a cylinder capable of driving the suction cup base to move, the suction cup base being slidably connected to the slide rail. The slide rail is provided on a surface of the first bracket 121 away from the first connection structure 123. The slide rail is arranged in a one-to-one correspondence with the suction cup base. The slide rails are spaced apart from each other on the first bracket 121, and an extension direction of the slide rail is perpendicular to an extension direction of the suction cup base. Each slide rail is slidably connected to one suction cup base, and the suction cup base is movable along the extension direction of the slide rail to drive the suction cup 1221 to move toward or away from each other, so that the suction cup 1221 can avoid the harness region of the harness isolation plate 10.

The cylinder may be a single-acting cylinder, a double-acting cylinder, a diaphragm cylinder, or an impact cylinder. This disclosure imposes no specific limitations on a type of the cylinder. A cylinder barrel of the cylinder is arranged on the first bracket 121, and a piston of the cylinder is connected to the suction cup base to drive the suction cup base to move on the slide rail.

By arranging the slide rail on the first bracket 121, the suction cup base is slidably connected to the slide rail, achieving movement of the suction cup base relative to the first bracket 121. Simply pushing the suction cup base can change the position of the suction cup 1221, making the suction tool compatible with different types of harness isolation plates 10. The operation is simple, type switching is fast, and time and effort are saved. By providing the cylinder capable of driving the suction cup base, electrical operation can be achieved, offering convenience and avoiding errors from manual operation.

In some embodiments, the suction tool 12 further includes a first positioning structure arranged on the first bracket 121, the first positioning structure having a positioning portion arranged along a suction direction of the suction assembly 122, and the first positioning structure being configured to match a corresponding structure of another tool to prevent relative displacement between the suction tool and the another tool along a non-suction direction. The first bracket 121 is configured in a plate shape, the suction assembly 122 is arranged at a position near a center of the extension surface of the first bracket 121, the first positioning structure is arranged on the extension surface of the first bracket 121 located between an edge of the suction assembly 122 and an edge of the first bracket 121, and the suction direction of the suction assembly 122 is perpendicular to the extension surface of the first bracket 121. The first positioning structure has the positioning portion arranged along the suction direction and is configured to match the corresponding structure of the another tool. In other words, the positioning portion of the first positioning structure is perpendicular to the extension surface of the first bracket 121 and protrudes beyond a plane of the suction assembly 122 away from the first bracket 121.

By arranging the first positioning structure on the first bracket 121, and since the first positioning structure can match the corresponding structure of the other tool, positioning between the suction tool 12 and the other tool is achieved. Since the first positioning structure has the positioning portion arranged along the suction direction of the suction assembly 122, the suction tool 12 and the another tool cannot displace along the non-suction direction. The structure is simple, and assembly precision is high.

In some embodiments, the first positioning structure includes a positioning pin 124 oriented toward the suction direction of the suction assembly 122, the positioning pin 124 being configured to cooperate with a corresponding structure of an assembly platform 16 to prevent relative displacement between the suction tool 12 and the assembly platform 16 along the non-suction direction. The first positioning structure includes the positioning pin 124 arranged perpendicular to the extension surface of the first bracket 121, and the positioning pin 124 is inserted into the corresponding structure of the assembly platform 16, such as a positioning hole. A relative position between the positioning pin 124 and the suction assembly 122 on the first positioning structure is fixed, and after the positioning pin 124 is inserted into the corresponding structure of the assembly platform 16, a relative position of the suction assembly 122 on the assembly platform 16 can also be determined. Multiple positioning pins 124 may be provided, and multiple corresponding structures are provided on the assembly platform 16 accordingly. Insertion is possible only after all positions of the positioning pins 124 align with positions of the corresponding structures of the assembly platform 16, achieving precise positioning.

Since the positioning pin 124 cooperates with the corresponding structure of the assembly platform 16, and the positioning pin 124 is oriented toward the suction direction of the suction assembly 122, the suction tool 12 and the assembly platform 16 can be positioned via the positioning pin 124, preventing displacement between the suction tool 12 and the assembly platform 16 along the non-suction direction.

In some embodiments, the first positioning structure includes a positioning groove 130 arranged on the first bracket 121, the positioning groove 130 being configured to cooperate with a corresponding structure of a positioning platform to prevent relative displacement between the suction tool 12 and the positioning platform along the non-suction direction. The positioning groove 130 is provided on a surface of the first bracket 121 near the suction assembly 122, the positioning platform is provided with the corresponding structure cooperating with the positioning groove 130, and when the first bracket 121 drives the suction assembly 122 to approach the positioning platform, the corresponding structure on the positioning platform is inserted into the positioning groove 130 and becomes in contact with a bottom of the positioning groove 130, preventing further approach of the first bracket 121. The positioning groove 130 extends into the first bracket 121 in a direction perpendicular to the extension surface of the first bracket 121, meaning that the positioning groove 130 extends into the first bracket 121 parallel to the suction direction. After the corresponding structure on the positioning platform is inserted into the positioning groove 130, movement between the positioning platform and the suction tool 12 can only occur in the suction direction and not in the non-suction direction. Optionally, multiple positioning grooves 130 are provided, and multiple corresponding structures are provided on the positioning platform accordingly. Insertion is possible only after all positions of the positioning grooves 130 align with positions of the corresponding structures of the positioning platform, achieving precise positioning.

Since the first bracket 121 is provided with the positioning groove 130, the positioning groove 130 can cooperate with the corresponding structure of the positioning platform, and after the corresponding structure of the positioning platform cooperates with the positioning groove 130, displacement between the suction tool 12 and the positioning platform along the non-suction direction is prevented.

In some embodiments, the suction tool 12 further includes a buffer member 125, the buffer member 125 being arranged on a side of the suction assembly 122 facing the harness isolation plate 10, and under the condition that the suction assembly 122 adsorbs the harness isolation plate 10, the buffer member 125 abutting against the harness isolation plate 10. The buffer member 125 is provided on a surface of the suction assembly 122 away from the first bracket 121, and the buffer member 125 itself can deform under external force, thereby counteracting an impact of the external force. The buffer member 125 may be made of an elastic material or an elastic structure. The elastic material includes but is not limited to sponge, foamed polyethylene, and polyester foam. The elastic structure includes but is not limited to a spring.

The buffer member 125 fully or partially covers a surface of the suction assembly 122, and the suction assembly 122 is in contact with the harness isolation plate 10 via the buffer member 125. This disclosure imposes no specific limitations on a specific arrangement form of the buffer member 125. When the buffer member 125 is arranged to fully cover the surface of the suction assembly 122, since the suction assembly 122 avoids the harness region of the harness isolation plate 10, the buffer member 125 arranged thereon also avoids the harness region of the harness isolation plate 10. When the buffer member 125 is arranged to partially cover the surface of the suction assembly 122, the buffer member 125 may be arranged corresponding to the palladium sheets 102 with higher strength on the harness isolation plate 10, so that when the suction assembly 122 adsorbs the harness isolation plate 10, only the palladium sheets 102 with higher strength become in contact and bear force with the buffer member 125.

Since the buffer member 125 is provided on the side of the suction assembly 122 facing the harness isolation plate 10, when the suction assembly 122 adsorbs the harness isolation plate 10, the harness isolation plate 10 directly becomes in contact with the buffer member 125 rather than the suction assembly 122, and the buffer member 125 disperses and cushions pressure between the harness isolation plate 10 and the suction assembly 122.

In some embodiments, the buffer member 125 is an elastic pad arranged on the suction assembly 122, the elastic pad is provided with multiple suction holes 1251, and the suction assembly 122 adsorbs the harness isolation plate 10 through the suction holes 1251. The elastic pad is arranged on a surface of the suction assembly 122 away from the first bracket 121 and directly becomes in contact with the harness isolation plate 10 during adsorption. The elastic pad is designed with clearance. Similarly, the elastic pad is arranged to avoid the harness region of the harness isolation plate 10, and the elastic pad is provided with multiple suction holes 1251 to allow airflow within the suction assembly 122, enabling the suction assembly 122 to adsorb the harness isolation plate 10 through the suction holes 1251. Further, the elastic pad is arranged on the suction assembly 122 corresponding to the palladium sheets 102 of the harness isolation plate 10, and becomes in contact with only the palladium sheets 102 with higher strength during adsorption, achieving adsorption of the harness isolation plate 10 by adsorbing only the palladium sheets 102. Optionally, the elastic pad is a sponge pad.

Further, a pressure sensor may be arranged on the elastic pad to detect a pressure exerted by the elastic pad on the harness isolation plate 10 during adsorption and downward overshoot. If an adsorption force is too large or too small, a vacuum level inside the suction assembly 122 may be appropriately adjusted to regulate the suction force provided by the suction assembly 122; and if the pressure is too large, a pressure exerted by an external device on the first bracket 121 may be appropriately reduced.

Since the elastic pad is provided on the side of the suction assembly 122 facing the harness isolation plate 10, during adsorption, the elastic pad directly becomes in contact with the harness isolation plate 10, dispersing and cushioning the pressure between the harness isolation plate 10 and the suction assembly 122 through the elasticity of the elastic pad. The elastic pad is provided with the suction holes 1251, enabling the suction assembly 122 to perform normal adsorption through the suction holes 1251.

In some embodiments, the suction tool 12 further includes a vacuum generator 126 assembly arranged on the first bracket 121, the vacuum generator 126 assembly being in communication with the suction assembly 122 and configured to provide power to the suction assembly 122 for adsorbing the harness isolation plate 10. By arranging the vacuum generator 126 assembly on the first bracket 121, power required for the suction assembly 122 to adsorb the harness isolation plate 10 is provided.

In some embodiments, the vacuum generator 126 assembly includes a vacuum generator 126, a pneumatic switch valve 127, and a pneumatic duplex component 128, the vacuum generator 126 being sequentially connected to the suction assembly 122 via the pneumatic duplex component 128 and the pneumatic switch valve 127. The vacuum generator 126 and the pneumatic duplex component 128 are both arranged on the first bracket 121, the vacuum generator 126 is in communication with the suction assembly 122 via the pneumatic duplex component 128, the vacuum generator 126 is configured to provide power for gas flow, and the pneumatic duplex component 128 is in communication with the suction assembly 122 to filter gas from the suction assembly 122. Airflow is drawn in from the suction assembly 122, filtered by the pneumatic duplex component 128, and then discharged through the vacuum generator 126. The pneumatic switch valve 127 is arranged between the pneumatic duplex component 128 and the vacuum generator 126, and changing an opening degree of the pneumatic switch valve 127 can control an amount of gas entering, thereby adjusting the adsorption force. Optionally, the vacuum generator 126 provides a working air pressure of 0.5 MPa and has an air consumption of 180 L/min.

Specifically, the pneumatic duplex component 128 is connected to the vacuum generator 126 via a gas delivery pipe, and the pneumatic switch valve 127 is arranged on the gas delivery pipe. The pneumatic duplex component 128 is also electrically connected to the pneumatic switch valve 127, and the pneumatic duplex component 128 can monitor air pressure within the suction assembly 122 and control the opening degree of the pneumatic switch valve 127 based on the air pressure. Optionally, the pneumatic duplex component 128 is electrically connected to the vacuum generator 126 to control opening and closing of the vacuum generator 126 based on the air pressure within the suction assembly 122. A vacuum level within the suction assembly 122 can be controlled at -50 kPa, which meets suction force requirements for most models of harness isolation plates 10. For example: when a model of the harness isolation plate 10 is BLX-SW-910x180-10, a suction force provided by the vacuum generator 126 is 560 N; and when the model of the harness isolation plate 10 is BLX-SW-720x180-10, the suction force provided by the vacuum generator 126 is 440 N.

Power for the suction assembly 122 to adsorb the harness isolation plate 10 is provided through the vacuum generator 126. The pneumatic duplex component 128 controls an opening degree of the pneumatic switch valve 127 based on the air pressure within the suction assembly 122, thereby stabilizing the air pressure within the suction assembly 122. The pneumatic duplex component 128 is further configured to filter air, filtering air from the suction assembly 122.

In some embodiments, a safety hole 129 is provided on the first bracket 121 at a position corresponding to the suction assembly 122, and the safety hole 129 is in communication with the suction assembly 122. Multiple safety holes 129 are provided through the first bracket 121, the suction assembly 122 is in communication with the external atmosphere via the safety holes 129, and under the condition that an internal air pressure of the suction assembly 122 is too low, air can be introduced through the safety holes 129 to maintain internal air pressure stability. By providing the safety hole 129 in communication with the suction assembly 122 on the first bracket 121, air circulation is maintained, preventing excessively low air pressure inside the suction assembly 122. Optionally, a pressure relief valve is arranged on the first bracket 121, the pressure relief valve is in communication with the suction assembly 122, and the pressure relief valve can automatically open or close based on the internal air pressure of the suction assembly 122 to maintain the air pressure within the suction assembly 122 within a safe range.

In some embodiments, the first connection structure 123 is a first lifting ring 1231 arranged on the first bracket 121. The first connection structure 123 may alternatively be a hook, a magnetic piece, or a handle 1232, provided that the first connection structure can cooperate with the transport device to achieve hoisting. This disclosure imposes no specific limitations on a specific arrangement form of the first connection structure 123. For example, the first connection structure 123 is a handle 1232 arranged on the first bracket 121, two handles 1232 are spaced apart from each other on two sides of the first bracket 121, and the transport device or an operator can move the first bracket 121 by grasping the handles 1232.

Optionally, one first lifting ring 1231 is arranged at the center of a surface of the first bracket 121 away from the suction assembly 122, and the transport device is connected to the first lifting ring 1231 to drive the suction tool 12 to move. Similarly, optionally, two first lifting rings 1231 are arranged spaced apart on the first bracket 121, and the first lifting rings 1231 are symmetrically arranged on the first bracket 121. When the transport device drives the first lifting rings 1231 to hoist the suction tool 12, a posture of the suction tool 12 can be maintained stable. Connection of the first lifting ring 1231 and the transport device allows the suction tool 12 to be hoisted to a designated position.

In some embodiments, as shown in FIG. 5 and FIG. 6, the harness isolation plate assembly mechanism further includes a positioning tool 14 arranged on a positioning platform, the positioning tool 14 includes a second bracket 141 and a second positioning structure 142, the second bracket 141 is configured to support the harness isolation plate 10; and the second positioning structure 142 is arranged on the second bracket 141 and configured to cooperate with the first positioning structure to prevent relative displacement between the suction tool 12 and the positioning platform along the non-suction direction. The second bracket 141 is configured in a plate shape, and a dimension of the second bracket 141 is larger than a dimension of the harness isolation plate 10. One surface of the second bracket 141 rests on the positioning platform, and the second positioning structure 142 is provided on the other surface of the second bracket 141. The suction tool 12 moves with the harness isolation plate 10 to above the positioning platform, and through cooperation between the first positioning structure and the second positioning structure 142, the harness isolation plate 10 of the suction tool 12 is positioned within an upper region of the positioning tool 14, and the harness isolation plate 10 falls into the positioning tool 14 after being released.

Since the positioning tool 14 includes the second positioning structure 142, and the second positioning structure 142 can cooperate with the first positioning structure, enabling mutual positioning between the positioning tool 14 and the suction tool 12. Since the first positioning structure has the positioning portion arranged along the suction direction of the suction assembly 122, relative displacement between the suction tool 12 and the positioning platform along the non-suction direction can be prevented.

In some embodiments, as shown in FIG. 7, the second positioning structure 142 is a top post arranged on the second bracket 141, the top post protrudes upward along the second bracket 141, and under the condition that the top post cooperates with the first positioning structure, the top post supports and lifts the suction tool 12, so that the suction assembly 122 and an upper surface of the second bracket 141 have a clearance gap. The second positioning structure 142 may alternatively be a groove arranged on the second bracket 141. The groove recesses into the second bracket 141 to a certain depth, and when the groove cooperates with the first positioning structure, the first positioning structure supports and lifts the suction tool 12 away from the positioning tool 14, so that the suction assembly 122 and the upper surface of the second bracket 141 have a clearance gap. The surface of the second bracket 141 away from the positioning platform is the upper surface.

Optionally, the first positioning structure includes a positioning pin 124 oriented toward the suction direction, and after the positioning pin 124 aligns with the top post, the first bracket 121 cannot move closer to the second bracket 141, creating a gap between the first bracket 121 and the second bracket 141, where a length of the gap is a sum of a length of the positioning pin 124 and a length of the top post. Alternatively, a length of the positioning pin 124 may be greater than a depth of the groove on the second bracket 141, and the positioning pin 124 is inserted into a bottom of the groove, creating a gap between the first bracket 121 and the second bracket 141, where a length of the gap is a difference between the length of the positioning pin 124 and the depth of the groove. Similarly, optionally, the first positioning structure includes a positioning groove 130, a length of the top post is greater than a depth of the positioning groove 130, and the top post is inserted into a bottom of the positioning groove 130, creating a gap between the first bracket 121 and the second bracket 141, where a length of the gap is a difference between the length of the top post and the depth of the positioning groove 130. Optionally, the length of the gap is determined based on a production tolerance of the harness isolation plate 10 and ranges from 0.5 mm to 2.0 mm.

Since the second bracket 141 is provided with the top post protruding upward, after the top post cooperates with the first positioning structure, displacement between the positioning tool 14 and the suction tool 12 in the non-suction direction can be prevented, and the suction tool 12 can be lifted by the top post, maintaining a safety gap between the positioning tool 14 and the suction tool 12.

In some embodiments, the positioning tool 14 further includes a limiting member 143 arranged on the second bracket 141, the limiting member 143 being configured to enclose a positioning space matching an outer contour of the harness isolation plate 10. The limiting members 143 together form a continuous or discontinuous frame, the frame corresponds to the outer contour of the harness isolation plate 10 to form the positioning space, and under the condition that the harness isolation plate 10 is placed in the positioning space, edges of the harness isolation plate 10 fit closely with the limiting members 143. During use, the suction tool 12 drives the harness isolation plate 10 to move close to the positioning tool 14, and after the mutual positions are determined through the first positioning structure and the second positioning structure 142, the harness isolation plate 10 is released, the harness isolation plate 10 falls into the positioning space formed by the limiting members 143, and the limiting members 143 perform position correction, achieving precise positioning of the harness isolation plate 10.

If the limiting members 143 are configured as a continuous frame, that is, the limiting members 143 are configured into a closed shape, edges of the frame fit closely with edges of the harness isolation plate 10. Further, the second bracket 141 is provided with multiple groups of slots, each group of slots being arranged corresponding to different types of harness isolation plates 10, meaning that the slots are arranged around a periphery of the harness isolation plate 10. One side of the limiting member 143 is provided with an insertion piece, and the limiting member 143 is mounted on the second bracket 141 by inserting the insertion piece into the slot. The limiting members 143 are configured in various forms based on different models of harness isolation plates 10, with edges of each type of limiting member 143 respectively fitting a contour of the corresponding type of harness isolation plate 10. During use, a type of the limiting member 143 is determined based on a type of the harness isolation plate 10, and the corresponding type of limiting member 143 is inserted into the slot, enabling the positioning tool 14 to adapt to different types of harness isolation plates 10.

If the limiting members 143 are configured as a discontinuous frame, that is, the limiting members 143 are configured into an open shape, edges of the frame fit closely with edges of the harness isolation plate 10. At least four limiting members 143 are provided, the limiting members 143 are arranged in pairs opposite each other and spaced apart on the second bracket 141. The limiting members 143 may be configured in an L-shape and arranged on the second bracket 141 corresponding to four corners of the harness isolation plate 10; alternatively, the limiting members 143 may be configured as flat plates and arranged on the second bracket 141 corresponding to four edges of the harness isolation plate 10. The limiting members 143 together enclose the positioning space for supporting and positioning the harness isolation plate 10.

By arranging the limiting member 143 on the second bracket 141, and since the limiting member 143 encloses the positioning space matching the outer contour of the harness isolation plate 10, after the suction tool 12 moves the harness isolation plate 10 to the positioning tool 14 and positioning is achieved through cooperation between the first positioning structure and the second positioning structure 142, the harness isolation plate 10 is released so that the harness isolation plate 10 to fall into the positioning space enclosed by the limiting member 143, achieving position correction of the harness isolation plate 10.

In some embodiments, a side of the limiting member 143 facing the positioning space is provided with a guide slope, and an upper end of the guide slope is inclined toward a direction away from the positioning space, so that a planar contour of an end of the positioning space away from the second bracket 141 is larger than a planar contour of an end of the positioning space close to the second bracket 141. The limiting member 143 is arranged on a surface of the second bracket 141 away from the positioning platform and protrudes from the surface of the second bracket 141. The limiting members 143 together enclose the positioning space, and a surface of the limiting member 143 facing the positioning space is configured as the guide slope with a narrow upper end and a wide lower end.

Specifically, the upper end of the guide slope is inclined toward the direction away from the positioning space, one side of the space is provided with the guide slope, and the upper end of the guide slope is inclined toward the direction away from the positioning space, so that the planar contour of the end of the positioning space away from the second bracket 141 is larger than the planar contour of the end of the positioning space close to the second bracket 141. An end of the guide slope of the limiting member 143 close to the second bracket 141 is considered a lower end, and an end away from the second bracket 141 is considered an upper end.

Since the guide slope is provided on the side of the limiting member 143 facing the positioning space, and the upper end of the guide slope is inclined toward the direction away from the positioning space, even if the falling harness isolation plate 10 has a certain deviation relative to the positioning space, the harness isolation plate 10 can be easily guided into the positioning space.

In some embodiments, the limiting member 143 is slidably connected to the second bracket 141, allowing the limiting member 143 to slide and adjust a size of the positioning space. Multiple limiting members 143 are provided, at least one limiting member 143 corresponds to one edge of the harness isolation plate 10, and each limiting member 143 is slidably connected to the second bracket 141, enabling opposing limiting members 143 to slide toward or away from each other, so that the positioning space enclosed by the limiting members 143 can adapt to different models of harness isolation plates 10. An oblong hole 144 may be provided on the second bracket 141, an extension direction of the oblong hole 144 is perpendicular to an extension direction of the limiting member 143, and the limiting member 143 is inserted into the oblong hole 144 and can slide along the oblong hole 144. Sliding the limiting member 143 changes a distance between opposing limiting members 143, enabling the limiting members 143 to fit edges of different models of harness isolation plates 10.

By slidably connecting the limiting member 143 to the second bracket 141, the limiting member 143 can slide relative to the second bracket 141 to change a position of the limiting member 143 relative to the second bracket 141, thereby changing a distance between the limiting members 143 and adjusting the size of the positioning space. This allows the limiting member 143 to be suitable for positioning harness isolation plates 10 of different sizes, offering strong compatibility.

In some embodiments, the second bracket 141 is provided with multiple support members 145, the multiple support members 145 are arranged to avoid the harness region of the harness isolation plate 10 to support the harness isolation plate 10. Multiple support members 145 such as support posts are arranged on a surface of the second bracket 141 away from the positioning platform. The multiple support members 145 are arranged on the second bracket 141 avoiding the harness region. The support members 145 may be arranged on the second bracket 141 corresponding to the palladium sheets 102 of the harness isolation plate 10. Further, an end of the support member 145 away from the second bracket 141 is provided with a cushion to buffer an impact force when the harness isolation plate 10 becomes in contact with the support member 145 after being released.

Optionally, multiple support members 145 are arranged within the positioning space, the support members 145 are arranged avoiding the harness region, and a height of the support member 145 is lower than a height of the limiting member 143. During use, the harness isolation plate 10 falls into the positioning space, edges of the harness isolation plate 10 fit closely with edges of the limiting members 143, and the support members 145 become in contact with the palladium sheets 102 and the plastic plate 103 of the harness isolation plate 10 to provide support.

By arranging the support members 145 avoiding the harness region on the second bracket 141, after the harness isolation plate 10 is released and falls onto the positioning tool 14, the harness region with the lowest strength on the harness isolation plate 10 is suspended, and only non-harness regions are in contact with the support members 145. This prevents impact force from damaging the harness region when the harness isolation plate 10 falls onto the positioning tool 14.

In some embodiments, the second bracket 141 is further provided with a second connection structure 146, the second connection structure 146 being configured to connect to the transport device to move the positioning tool 14. The second connection structure 146 may be configured as a lifting ring, a hook, or a magnetic piece, provided that the second connection structure can cooperate with the transport device to achieve hoisting. This disclosure imposes no specific limitations on the second connection structure 146. The second connection structure 146 is arranged on a surface of the second bracket 141 away from the positioning platform, and the transport device is connected to the second connection structure 146 to drive the suction tool 12 to move.

In some embodiments, the positioning tool 14 further includes support legs 147, the support legs 147 being connected to the second bracket 141 to support the second bracket 141 and adjust a height of the second bracket 141. Specifically, four support legs 147 are provided and arranged near four corners of the second bracket 141, respectively. A surface of the support leg 147 is configured with threads, and the support leg 147 is connected to the second bracket 141 via threads. After the second bracket 141 is placed on the positioning platform, the support legs 147 can be rotated to adjust a distance of the second bracket 141 relative to the positioning platform or to level the second bracket 141.

By arranging the support legs 147 on the second bracket 141, support for the positioning tool 14 is achieved. Additionally, the support legs 147 can be further configured to adjust the height of the second bracket 141, facilitating height adaptation between the positioning tool 14 and the suction tool 12.

In some embodiments, the harness isolation plate assembly mechanism further includes a loading tray, the loading tray being arranged on a loading platform and configured to support the harness isolation plate 10 to be adsorbed; and the loading tray being provided with a third positioning structure configured to cooperate with the first positioning structure to prevent relative displacement between the suction tool 12 and the loading platform along the non-suction direction. The loading tray is placed on the loading platform, one surface of the loading tray is in contact with the loading platform, and the other surface supports the harness isolation plate 10. The third positioning structure is provided on the side supporting the harness isolation plate 10. The third positioning structure can cooperate with the first positioning structure, enabling mutual positioning between the loading tray and the suction tool 12.

Since the loading tray is provided with the third positioning structure cooperating with the first positioning structure, and the first positioning structure is arranged on the suction tool 12, after the first positioning structure cooperates with the third positioning structure, a position between the suction tool 12 and the loading tray is fixed. Since the first positioning structure has the positioning portion arranged along the suction direction of the suction assembly 122, relative displacement between the suction tool 12 and the loading platform along the non-suction direction can be prevented.

According to a second aspect, this disclosure provides a battery production line, as shown in FIG. 8, including: an assembly platform 16; the harness isolation plate 10 assembly mechanism as described above; and a transport device, the transport device being at least configured to transport the harness isolation plate 10 assembly mechanism to the assembly platform 16.

Since the battery production line is equipped with the harness isolation plate 10 assembly mechanism described above, during adsorption of the harness isolation plate 10, low-strength regions on the harness isolation plate 10 can be avoided, and the force on the harness isolation plate 10 is dispersed, achieving damage-free assembly of the harness isolation plate 10.

In some embodiments, the harness isolation plate 10 assembly mechanism includes a suction tool 12, a positioning tool 14, and a loading tray; and the battery production line further includes a loading platform and a positioning platform, the loading tray being arranged on the loading platform, the positioning tool 14 being arranged on the positioning platform; and the transport device being at least configured to transport the suction tool 12 from the loading platform to the positioning platform and from the positioning platform to the assembly platform 16.

The suction tool 12 adsorbs the harness isolation plate 10 from the loading tray on the loading platform, the transport device moves the suction tool 12 to the positioning platform, the suction tool 12 releases the harness isolation plate 10 to the positioning tool 14 on the positioning platform for positioning, and the suction tool 12 adsorbs the positioned harness isolation plate 10 to the assembly platform 16 to complete subsequent assembly. This achieves precise assembly.

In some embodiments, the suction tool 12 is provided with a first positioning structure, the positioning tool 14 is provided with a second positioning structure 142, the loading tray is provided with a third positioning structure, and the assembly platform 16 is provided with a fourth positioning structure 161; where the first positioning structure is capable of cooperating with the second positioning structure 142 to restrict relative displacement between the suction tool 12 and the positioning tool 14; the first positioning structure is capable of cooperating with the third positioning structure to restrict relative displacement between the suction tool 12 and the loading tray; and the first positioning structure is capable of cooperating with the fourth positioning structure 161 to restrict relative displacement between the suction tool 12 and the assembly platform 16.

Positioning between the suction tool 12 and the positioning tool 14 can be achieved through cooperation between the first positioning structure and the second positioning structure 142; positioning between the suction tool 12 and the loading tray can be achieved through cooperation between the first positioning structure and the third positioning structure; and positioning between the suction tool 12 and the assembly platform 16 can be achieved through cooperation between the first positioning structure and the fourth positioning structure 161. This achieves precise assembly.

The foregoing embodiments are for description of the technical solutions of this disclosure only rather than for limiting this disclosure. Although this disclosure has been described in detail with reference to the foregoing embodiments, persons of ordinary skill in the art should appreciate that they can still make modifications to the technical solutions described in the embodiments or make equivalent replacements to some or all technical features thereof. However, these modifications or replacements do not make the essence of the corresponding technical solutions deviate from the scope of the technical solutions of the embodiments of this disclosure, and they should all be included in the scope of this disclosure. In particular, as long as there is no structural conflict, the various technical features mentioned in the embodiments can be combined in any manner.

## Claims

1. A harness isolation plate assembly mechanism comprising:
a suction tool comprising a first bracket and a suction assembly, wherein
the first bracket is provided with a first connection structure, the first connection structure being configured to connect to a transport device to move the first bracket, and an extension surface of the first bracket being parallel to an extension surface of a harness isolation plate to be grabbed; and
the suction assembly is fixed on the extension surface of the first bracket and arranged to avoid a harness region of the harness isolation plate, and the suction assembly is configured to adsorb or release the harness isolation plate.

2. The harness isolation plate assembly mechanism according to claim 1, wherein the suction assembly is arranged at a position on the first bracket away from an edge and corresponds to a palladium sheet of the harness isolation plate.

3. The harness isolation plate assembly mechanism according to claim 1 or 2, wherein the suction assembly comprises a suction cup and a suction cup base, the suction cup base being connected to the first bracket, and the suction cup being arranged on the suction cup base and configured to adsorb or release the harness isolation plate.

4. The harness isolation plate assembly mechanism according to claim 3, wherein the first bracket is provided with multiple groups of first fixing structures, the suction cup base is detachably connected to the first bracket via any one group of the first fixing structures.

5. The harness isolation plate assembly mechanism according to claim 4, wherein the first fixing structures are multiple groups of suction cup base mounting holes arranged at different positions on the first bracket.

6. The harness isolation plate assembly mechanism according to claim 3, wherein the suction cup base is movably connected to the first bracket, so that the suction cup base is movable relative to the first bracket to at least two different positions.

7. The harness isolation plate assembly mechanism according to claim 6, wherein the suction tool further comprises a movable mechanism, wherein the movable mechanism is connected to the suction cup base and configured to drive the suction cup base to be movable relative to the first bracket.

8. The harness isolation plate assembly mechanism according to claim 7, wherein the movable mechanism comprises a slide rail arranged on the first bracket and a cylinder capable of driving the suction cup base to move, the suction cup base being slidably connected to the slide rail.

9. The harness isolation plate assembly mechanism according to any one of claims 1 to 8, wherein the suction tool further comprises a first positioning structure arranged on the first bracket, the first positioning structure having a positioning portion arranged along a suction direction of the suction assembly, and the first positioning structure being configured to match a corresponding structure of another tool to prevent relative displacement between the suction tool and the another tool along a non-suction direction.

10. The harness isolation plate assembly mechanism according to claim 9, wherein the first positioning structure comprises a positioning pin oriented toward the suction direction of the suction assembly, the positioning pin being configured to cooperate with a corresponding structure of an assembly platform to prevent relative displacement between the suction tool and the assembly platform along the non-suction direction.

11. The harness isolation plate assembly mechanism according to claim 9 or 10, wherein the first positioning structure comprises a positioning groove arranged on the first bracket, the positioning groove being configured to cooperate with a corresponding structure of a positioning platform to prevent relative displacement between the suction tool and the positioning platform along the non-suction direction.

12. The harness isolation plate assembly mechanism according to any one of claims 1 to 11, wherein the suction tool further comprises a buffer member, the buffer member being arranged on a side of the suction assembly facing the harness isolation plate, and under the condition that the suction assembly adsorbs the harness isolation plate, the buffer member abutting against the harness isolation plate.

13. The harness isolation plate assembly mechanism according to claim 12, wherein the buffer member is an elastic pad arranged on the suction assembly, the elastic pad is provided with multiple suction holes, and the suction assembly adsorbs the harness isolation plate through the suction holes.

14. The harness isolation plate assembly mechanism according to any one of claims 1 to 13, wherein the suction tool further comprises a vacuum generator assembly arranged on the first bracket, the vacuum generator assembly being in communication with the suction assembly and configured to provide power to the suction assembly for adsorbing the harness isolation plate.

15. The harness isolation plate assembly mechanism according to claim 14, wherein the vacuum generator assembly comprises a vacuum generator, a pneumatic switch valve, and a pneumatic duplex component, the vacuum generator being sequentially connected to the suction assembly via the pneumatic duplex component and the pneumatic switch valve.

16. The harness isolation plate assembly mechanism according to any one of claims 1 to 15, wherein a safety hole is provided on the first bracket at a position corresponding to the suction assembly, and the safety hole is in communication with the suction assembly.

17. The harness isolation plate assembly mechanism according to any one of claims 1 to 16, wherein the first connection structure is a first lifting ring arranged on the first bracket.

18. The harness isolation plate assembly mechanism according to any one of claims 9 to 11, wherein the harness isolation plate assembly mechanism further comprises a positioning tool arranged on a positioning platform, the positioning tool comprises a second bracket and a second positioning structure, and the second bracket is configured to support the harness isolation plate; and
the second positioning structure is arranged on the second bracket and configured to cooperate with the first positioning structure to prevent relative displacement between the suction tool and the positioning platform along the non-suction direction.

19. The harness isolation plate assembly mechanism according to claim 18, wherein the second positioning structure is a top post arranged on the second bracket, the top post protrudes upward along the second bracket, and under the condition that the top post cooperates with the first positioning structure, the top post supports and lifts the suction tool, so that the suction assembly and an upper surface of the second bracket have a clearance gap.

20. The harness isolation plate assembly mechanism according to claim 18 or 19, wherein the positioning tool further comprises a limiting member arranged on the second bracket, the limiting member being configured to enclose a positioning space matching an outer contour of the harness isolation plate.

21. The harness isolation plate assembly mechanism according to claim 20, wherein a side of the limiting member facing the positioning space is provided with a guide slope, and an upper end of the guide slope is inclined toward a direction away from the positioning space, so that a planar contour of an end of the positioning space away from the second bracket is larger than a planar contour of an end of the positioning space close to the second bracket.

22. The harness isolation plate assembly mechanism according to claim 20 or 21, wherein the limiting member is slidably connected to the second bracket, allowing the limiting member to slide and adjust a size of the positioning space.

23. The harness isolation plate assembly mechanism according to any one of claims 18 to 22, wherein the second bracket is provided with multiple support members, the multiple support members are arranged to avoid the harness region of the harness isolation plate to support the harness isolation plate.

24. The harness isolation plate assembly mechanism according to any one of claims 18 to 23, wherein the second bracket is further provided with a second connection structure, the second connection structure being configured to connect to the transport device to move the positioning tool.

25. The harness isolation plate assembly mechanism according to any one of claims 18 to 24, wherein the positioning tool further comprises support legs, the support legs being connected to the second bracket to support the second bracket and adjust a height of the second bracket.

26. The harness isolation plate assembly mechanism according to any one of claims 9 to 11 and 18 to 25, wherein the harness isolation plate assembly mechanism further comprises a loading tray, the loading tray being arranged on a loading platform and configured to support the harness isolation plate to be adsorbed; and the loading tray being provided with a third positioning structure configured to cooperate with the first positioning structure to prevent relative displacement between the suction tool and the loading platform along the non-suction direction.

27. A battery production line comprising:
an assembly platform;
the harness isolation plate assembly mechanism according to any one of claims 1 to 26; and
a transport device, the transport device being at least configured to transport the harness isolation plate assembly mechanism to the assembly platform.

28. The battery production line according to claim 27, wherein the harness isolation plate assembly mechanism comprises a suction tool, a positioning tool, and a loading tray; and
the battery production line further comprises a loading platform and a positioning platform, the loading tray being arranged on the loading platform, the positioning tool being arranged on the positioning platform; and the transport device being at least configured to transport the suction tool from the loading platform to the positioning platform and from the positioning platform to the assembly platform.

29. The battery production line according to claim 28, wherein the suction tool is provided with a first positioning structure, the positioning tool is provided with a second positioning structure, the loading tray is provided with a third positioning structure, and the assembly platform is provided with a fourth positioning structure; wherein
the first positioning structure is capable of cooperating with the second positioning structure to restrict relative displacement between the suction tool and the positioning tool;
the first positioning structure is capable of cooperating with the third positioning structure to restrict relative displacement between the suction tool and the loading tray; and
the first positioning structure is capable of cooperating with the fourth positioning structure to restrict relative displacement between the suction tool and the assembly platform.
